# EUROPÄISCHE PATENTANMELDUNG

(11) **EP 1 777 110 A1**
(43) Veröffentlichungstag der Anmeldung: **25.04.2007**
(21) Anmeldenummer: 06021748.6
(22) Anmeldetag: 17.10.2006
(51) Int. Cl.: B60R 7/04, B60N 3/08

(54) **Vorrichtung mit einem Deckel**

(30) Priorität: 24.10.2005 DE 102005050797
(71) Anmelder: fischer automotive systems GmbH, 72160 Horb (DE)
(72) Erfinder: Ganszki, Timo, 72178 Waldachtal (DE); Karrer, Frieder, 72160 Horb (DE); Leopold, Gunter, 72270 Baiersbronn (DE); Sehmsdorf, Andreas, 75382 Althengstett (DE); Sinner, Michael, 72108 Rottenburg (DE); Stump, Joachim, 10245 Berlin (DE); Wichmann, Sebastian, 71083 Herrenberg (DE)
(74) Vertreter: Suchy, Ulrich Johannes

(57) **Zusammenfassung**

Die Erfindung betrifft eine Vorrichtung (1) mit einem Deckel (3) zum Abdecken bzw. Verschließen einer Öffnung eines Ablagefachs (2), eines Aschenbechers oder dgl- in einem Kraftfahrzeug. Der Deckel (3) ist mit einem Hebelgetriebe (4, 11, 12) beweglich geführt, wobei ein Hebel (4) einen Spalt an einer Seite der Öffnung des Ablagefachs (2) durchgreift. Die Erfindung schlägt vor, den Spalt mit einer Spaltabdeckung (15) abzudecken, die beim Öffnen und Schließen des Deckels (3) von einem Koppelhebel (16), der am Hebelgetriebe (4, 11, 12) angelenkt ist, angehoben wird, so dass der Hebel (4) beim Öffnen und beim Schließen des Deckels (3) nicht mit der Spaltabdeckung (15) kollidiert. Bei offenem und bei geschlossenem Deckel (3) deckt die Spaltabdeckung (15) den Spalt ab.

## Beschreibung

Die Erfindung betrifft eine Vorrichtung mit einem Deckel mit den Merkmalen des Oberbegriffs des Anspruchs 1. Die Erfindung ist insbesondere für Ablagefächer, Aschenbecher oder Einbauräume in Kraftfahrzeugen vorgesehen.

Eine derartige Vorrichtung ist bekannt aus der DE 200 23 500 U1. Bei der bekannten Vorrichtung ist der Deckel auf jeder Seite an einem Hebel geführt, der bei der bekannten Vorrichtung starr vom Deckel absteht. Letzteres ist für die Erfindung allerdings nicht zwingend, der Hebel kann auch gelenkig mit dem Deckel verbunden sein. Der Hebel durchgreift einen Spalt auf einer Seite einer Öffnung, die mit dem Deckel verschließ- bzw. abdeckbar ist. Bei geschlossenem Deckel deckt der Deckel den Spalt ab. Bei geöffnetem Deckel ist eine mit dem Deckel gekoppelte Spaltabdeckung vorgesehen, die den Spalt möglichst vollständig und lückenlos abdeckt. Die Spaltabdeckung ist eine streifenförmige Blende. Sie wirkt einem Eindringen von Schmutz durch den vom Hebel des Deckels durchgriffenen Spalt entgegen. Insbesondere wenn die Vorrichtung ein Aschenbecher ist, wirkt die Spaltabdeckung einem Eindringen von Zigarettenasche durch den Spalt entgegen. Des Weiteren vermeidet die Spaltabdeckung, dass Kleinteile durch den Spalt fallen und sich in einer Mechanik der Vorrichtung verklemmen können. Außerdem dient die Spaltabdeckung einem optisch ansprechenden Aussehen bei offenem Deckel.

Der Erfindung liegt die Aufgabe zugrunde, eine alternative Spaltabdeckung vorzuschlagen.

Diese Aufgabe wird erfindungsgemäß durch die Merkmale des Anspruchs 1 gelöst. Die Spaltabdeckung der erfindungsgemäßen Vorrichtung gibt während einer Öffnungsbewegung und während einer Schließbewegung des Deckels den Spalt, der von dem den Deckel führenden Hebel durchgriffen wird, frei und deckt den Spalt am Ende der Deckelbewegung, also sowohl bei offenem als auch bei geschlossenem Deckel, ab. Die Erfindung hat den Vorteil, dass der Spalt auch bei geschlossenem Deckel von der Spaltabdeckung abgedeckt ist. Der Spalt muss deswegen nicht vom geschlossenen Deckel abgedeckt sein. Weiterer Vorteil der Erfindung ist die Unterbringung der Spaltabdeckung bei geschlossenem Deckel dort, wo sich die Spaltabdeckung auch bei geöffnetem Deckel befindet. Es ist deswegen kein zusätzlicher Bauraum für die Spaltabdeckung beim geschlossenen Deckel notwendig. Die Spaltabdeckung vollführt beim Öffnen und beim Schließen des Deckels eine vergleichsweise kleine Bewegung, so dass auch hierfür nur ein vergleichsweise kleiner Bewegungsraum zur Verfügung stehen muss. Das ist ein nicht zu unterschätzender Vorteil bei den üblicherweise sehr engen Raumverhältnissen für Führungen und Getriebe des Deckels, die unterhalb bzw. hinter dem Spalt auf kleinem Bauraum untergebracht werden müssen. Zudem ermöglicht die Erfindung eine Bewegung der Spaltabdeckung nach oben bzw. außen, so dass sie nicht in den Bauraum für die Führung und das Getriebe des Deckels unterhalb bzw. hinter dem abzudeckenden Spalt eindringt.

Die Öffnungs- und die Schließbewegung des Deckels der erfindungsgemäßen Vorrichtung kann eine reine Schwenkbewegung, d.h. ausschließlich rotatorisch, sie kann eine reine Verschiebung, d.h. ausschließlich translatorisch, oder eine kombinierte rotatorisch/translatorische Bewegung sein.

Eine Ausgestaltung der Erfindung sieht vor, dass die Spaltabdeckung beim Öffnen und beim Schließen des Deckels angehoben und am Ende der Öffnungs- und der Schließbewegung des Deckels wieder abgesenkt wird.

Bei einer Ausgestaltung der Erfindung ist der Hebel, der den Deckel führt, quer zu einer Bewegungsrichtung des Deckels gekröpft. Dadurch ist es möglich, dass sich der Hebel bereichsweise neben der Spaltabdeckung befindet, und zwar insbesondere bei offenem und bei geschlossenem Deckel, wenn die Spaltabdeckung den vom Hebel durchgriffenen Spalt abdeckt. Damit der Hebel bei der Bewegung des Deckels nicht mit der Spaltabdeckung kollidiert, wird die Spaltabdeckung beim Öffnen und beim Schließen des Deckels entsprechend bewegt, insbesondere angehoben und abgesenkt oder auch zur Seite bewegt.

Eine Ausgestaltung der Erfindung sieht ein ebenes Hebelgetriebe zur Führung des Deckels vor. Ein Hebelgetriebe ermöglicht eine gewünschte, kombinierte translatorische und rotatorische Bewegung des Deckels.

Dabei sieht eine Weiterbildung ein Viergelenk als Hebelgetriebe vor, d. h. ein Getriebe mit vier Gelenken, von denen vorzugsweise zwei ortsfest sind.

Zum Antrieb der Spaltabdeckung sieht eine Ausgestaltung der Erfindung einen Koppelhebel vor, der die Spaltabdeckung mit dem Deckel verbindet. Die Verbindung kann auch mittelbar über das Hebelgetriebe erfolgen. Auf diese Weise ist ein einfacher, von der Deckelbewegung abgeleiteter Antrieb der Spaltabdeckung möglich.

Zur zusätzlichen Führung der Spaltabdeckung sieht eine Weiterbildung der Erfindung ein Linearlager vor, das die Spaltabdeckung mit Abstand vom Angriffspunkt des Koppelhebels verschieblich führt. Das Linearlager kann, muss aber keine Geradführung sein.

Die Erfindung wird nachfolgend anhand eines in der Zeichnung dargestellten Ausführungsbeispiels näher erläutert. Die drei Figuren zeigen eine Seite einer erfindungsgemäßer Vorrichtung in perspektivischer Darstellung in drei Deckelstellungen.

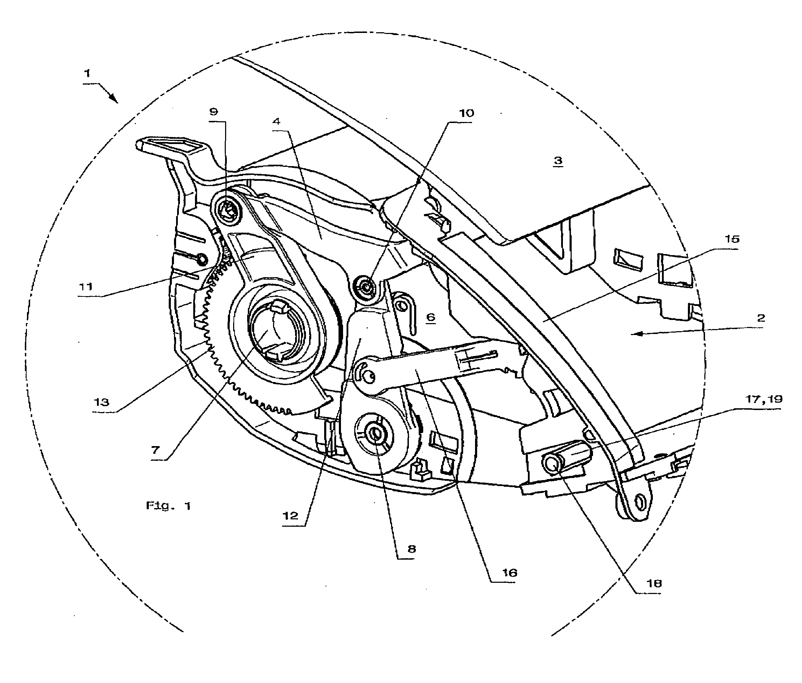

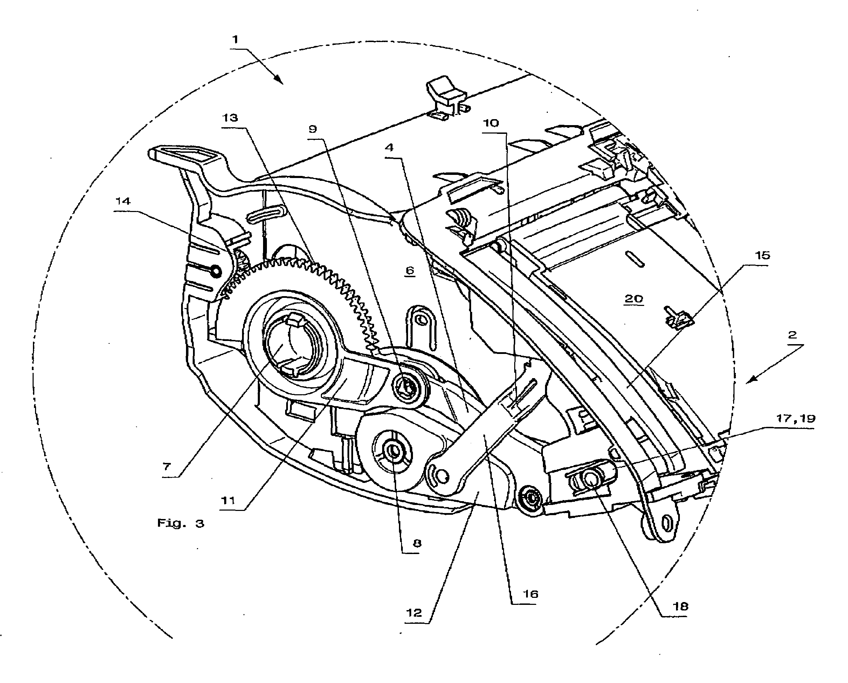

Die in der Zeichnung dargestellte, erfindungsgemäße Vorrichtung 1 weist ein Ablagefach 2 mit einer rechteckigen Öffnung auf. Grundsätzlich könnte es sich auch beispielsweise um einen Aschenbecher handeln. Die Öffnung ist mit einem Deckel 3 verschließ- bzw. abdeckbar. Der Deckel 3 ist in Figur 1 in einer offenen Stellung und in Figur 2 in einer Zwischenstellung dargestellt. In Figur 3 ist das Ablagefach 2 geschlossen dargestellt, wobei der Deckel 3 der Übersichtlichkeit wegen weggelassen ist, so dass ein Deckelträger 20 sichtbar ist, auf dem der Deckel 3 an sich angebracht ist. Die Öffnungs- und Schließbewegung des Deckels 3 ist eine im Wesentlichen translatorische Bewegung auf einer gedachten, näherungsweise kreisbogenförmigen Bahn, wobei der Deckel 3 näherungsweise tangential zur Bewegungsrichtung angeordnet ist.

Der Deckel 3 weist auf beiden Seiten jeweils einen Hebel 4 auf, der starr und einstückig von einer Unterseite des Deckels 3 absteht. Der Hebel 4 durchgreift einen Spalt 5 auf der Seite der Öffnung des Ablagefachs 2. Der Spalt 5 erstreckt sich Ober eine Tiefe (Länge) der Öffnung des Ablagefachs 2. Der Hebel 4 ist quer zur Bewegungsrichtung des Deckels 3 gekröpft, d. h. zweimal in entgegengesetzte Richtungen in etwa rechtwinklig abgewinkelt. Dadurch befindet sich der Hebel 4 in einer Ebene mit dem Spalt 5 und ist in einem deckelnahen Bereich nach innen in die Öffnung des Ablagefachs 2 versetzt.

Der mit dem Deckel 3 einstückige Hebel 4 ist Teil eines Hebelgetriebes zur Führung des Deckels 3 beim Öffnen und Schließen. Das Hebelgetriebe ist als ebenes Viergelenk ausgebildet, das auf einer Außenseite einer Seitenwand 6 und in einer Ebene mit dem Spalt 5 angeordnet ist. Das Hebelgetriebe weist zwei bzgl. des Ablagefachs 2 ortsfeste Gelenke 7, 8 sowie zwei weitere Gelenke 9, 10 auf, die den gekröpften Hebel 4 gelenkig mit zwei schwenkbaren Hebeln 11, 12 verbinden. Die Gelenke 7, 8, 9 10 sind auf den Ecken eines gedachten Trapez angeordnet, die beiden Hebel 11, 12 stehen also nicht exakt parallel zueinander, sondern divergieren in Richtung des mit dem Deckel 3 einstückigen Hebels 4. Der mit dem Deckel 3 einstückige Hebel 4 erstreckt sich über die Gelenke 9, 10, die ihn mit den Hebeln 11, 12 verbinden, bogenförmig nach oben durch den Spalt 5 hindurch zum Deckel 3. Das als Viergelenk ausgebildete Hebelgetriebe 4, 11, 12 führt den Deckel 3 beim Öffnen und Schließen auf der oben beschriebenen bogenförmigen Bahn. Der Deckel 3 weist auf jeder Seite ein Hebelgetriebe 4, 11, 12 auf, die beiden Hebelgetriebe 4, 11, 12 sind deckungsgleich auf den Außenseiten der beiden Seitenwände 6 des Ablagefachs 2 angeordnet. Einer der beiden Hebel 11 weist eine Zahnstange 13 auf, die kreisbogenförmig um eine gedachte Schwenkachse des Hebels 11 verläuft Mit der Zahnstange 13 kämmt ein Zahnrad 14, das drehfest auf einer Welle sitzt, die quer durch beide Seitenwände 6 des Ablagefachs 2 hindurchgeht. Die Zahnräder 14 synchronisieren die Hebelgetriebe 4, 11, 12 auf beiden Seiten des Ablagefachs 2.

Die Spalte 5 auf beiden Seiten des Ablagefachs 2 sind bei offenem und bei geschlossenem Deckel 3 mit einer Spaltabdeckung 15 abgedeckt. Die Spaltabdeckung 15 ist eine streifenförmige Blende. Sie ist in ihrem Mittelbereich gelenkig mit einem Koppelhebel 16 verbunden, dessen der Spaltabdeckung 15 fernes Ende schwenkbar an einem der beiden Hebel 12 des Hebelgetriebes 4, 11, 12 angelenkt ist. Durch die Schwenkbewegung des Hebels 12 beim Öffnen und beim Schließen des Deckels 3 wird die Spaltabdeckung 15 vom Koppelhebel 16 während der Öffnungsbewegung und während der Schließbewegung des Deckels 3 angehoben und vom Spalt 5 abgehoben.

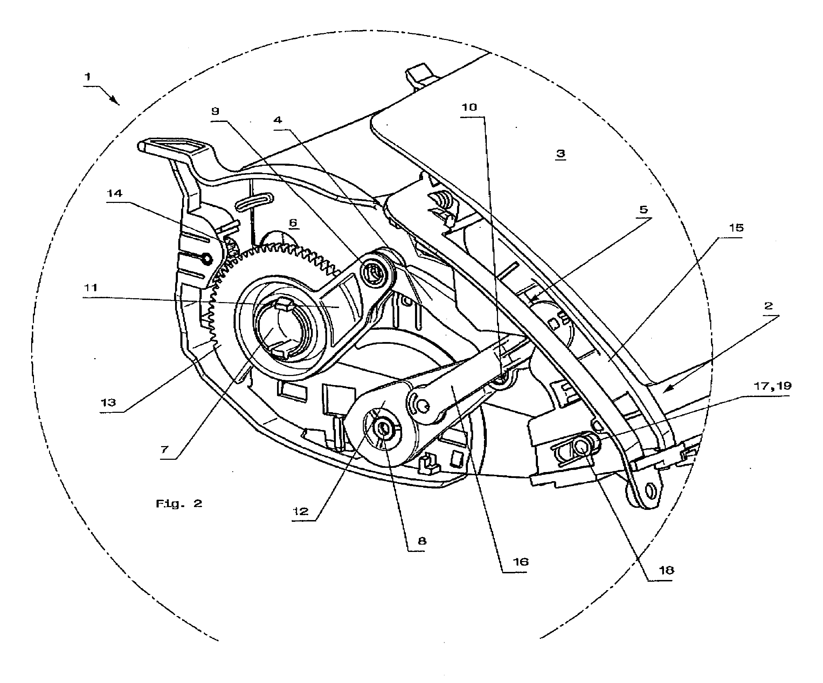

Am Ende der Öffnungsbewegung und der Schließbewegung des Deckels 3 senkt der am Hebelgetriebe 4, 11, 12 angelenkte Koppelhebel 16 die Spaltabdeckung 15 wieder auf den Spalt 5 ab, so dass bei offenem und geschlossenem Deckel 3 der Spalt 5 von der Spaltabdeckung 15 abgedeckt ist. Die angehobene Spaltabdeckung 15 und der dadurch freigegebene Spalt 5 sind in der in Figur 2 dargestellten Zwischenstellung des Deckels 3 sichtbar. Auch in der angehobenen Stellung befindet sich die Spaltabdeckung 15 unterhalb des Deckels 3, also zwischen dem Deckel 3 und der Öffnung des Ablagefachs 2. Das Anheben der Spaltabdeckung 15 während der Öffnungsbewegung und während der Schließbewegung des Deckels 3 vermeidet, dass der Hebel 4, der mit dem Deckel 3 einstückig ist und der während der Öffnungsbewegung und während der Schließbewegung des Deckels 3 weiter aus dem Spalt 5 vortritt als bei offenem und bei geschlossenem Deckel, mit der Spaltabdeckung 15 kollidiert.

An einem Ende ist die Spaltabdeckung 15 mit einer Linearführung verschieblich geführt. Die Linearführung weist einen geraden, schlüssellochförmigen Schlitz 17 in der Seitenwand 6 des Ablagefachs 2 auf, der in etwa rechtwinklig zur Öffnung des Ablagefachs 2 verläuft. Der Schlitz 17 wird von einem Zapfen 18 durchgriffen, der einstückig mit einem Hebel 19 ist, der starr von einer Unterseite der Spaltabdeckung 15 absteht. Der Zapfen 18 ist in der Zeichnung von seinem Kopf verdeckt. Eine kreisförmige Erweiterung des schlüssellochförmigen Schlitzes 17 dient zum Durchstecken des Kopfs des Zapfens 18 bei der Montage der Spaltabdeckung 15. Durch die Geometrie des Hebelgetriebes 4, 11, 12, des Koppelhebels 16 und der Linearführung 17, 18 wird die gewünschte Bewegung der Spaltabdeckung 15 beim Öffnen und beim Schließen des Deckels 3 erreicht.

## Patentansprüche

1. Vorrichtung mit einem Deckel (3), der an einem Hebel (4) geführt ist, der einen Spalt (5) durchgreift, und mit einer Spaltabdeckung (15), die mit dem Deckel (3) gekoppelt ist und die den Spalt (5) bei offenem Deckel (3) abdeckt, **dadurch gekennzeichnet, dass** die Spaltabdeckung (15) den Spalt (5) beim Öffnen und beim Schließen des Deckels (3) freigibt und am Ende der Deckelbewegung wieder abdeckt.

2. Vorrichtung nach Anspruch 1, **dadurch gekennzeichnet, dass** die Spaltabdeckung (15) beim Öffnen und beim Schließen des Deckels (3) angehoben und wieder abgesenkt wird.

3. Vorrichtung nach Anspruch 1, **dadurch gekennzeichnet, dass** der Hebel (4), der den Deckel (3) führt, quer zu einer Bewegungsrichtung des Deckels (3) gekröpft ist.

4. Vorrichtung nach Anspruch 1, **dadurch gekennzeichnet, dass** die Vorrichtung (1) ein ebenes Hebelgetriebe (4, 11, 12) zur Führung des Deckels (3) aufweist.

5. Vorrichtung nach Anspruch 4, **dadurch gekennzeichnet, dass** die Vorrichtung (1) ein Viergelenk als Hebelgetriebe (4, 11, 12) aufweist.

6. Vorrichtung nach Anspruch 1, **dadurch gekennzeichnet, dass** die Spaltabdeckung (15) Ober einen Koppelhebel (16) mit dem Deckel (3) verbunden ist.

7. Vorrichtung nach Anspruch 6, **dadurch gekennzeichnet, dass** die Spaltabdeckung (15) mit einem Linearlager (17, 18) mit Abstand vom Koppelhebel (16) verschieblich geführt ist.
